Europäisches Patentamt

(19) European Patent Office

Office européen des brevets

(11) Veröffentlichungsnummer: **0 269 894**
**B1**

(12) **EUROPÄISCHE PATENTSCHRIFT**

(45) Veröffentlichungstag der Patentschrift:
06.06.90

(51) Int. Cl.⁵: **B23C 3/12**

(21) Anmeldenummer: 87116219.4

(22) Anmeldetag: 04.11.87

(54) Fräsvorrichtung zum Bearbeiten, insbesondere Besäumen der Kanten von Blechbändern, Blechplatten oder dergleichen Werkstücken.

(30) Priorität: 07.11.86 DE 3638068

(43) Veröffentlichungstag der Anmeldung:
08.06.88 Patentblatt 88/23

(45) Bekanntmachung des Hinweises auf die Patenterteilung:
06.06.90 Patentblatt 90/23

(84) Benannte Vertragsstaaten:
AT FR GB IT SE

(56) Entgegenhaltungen:
DE-B- 1 502 100
DE-C- 3 400 661

PATENT ABSTRACTS OF JAPAN, Band 9,
Nr. 142 (M-388)[1865], 18. Juni 1985; & JP - A
- 60 20811 (MITSUBISHI JUKOGYO) 02.02.1985
SOVIET INVENTIONS ILLUSTRATED, Sektion Mechanik,
Woche B28, 22. August 1979, Zusammenfassungsnr.
G 0561 P 54, Derwent Publications Ltd., London, GB; &
SU - A - 624 729 (KHARK AVIATION INST) 08.08.1978

(73) Patentinhaber: LINSINGER MASCHINENBAU GMBH, Dr.
Linsingerstrasse 24, A-4662 Steyrermühl(AT)

(72) Erfinder: Pomikacsek, Josef, Esplanade 27,
A-4810 Gmunden(AT)

(74) Vertreter: Hafner, Dieter, Dr.rer.nat., Dipl.-Phys.,
Ostendstrasse 132, D-8500 Nürnberg 30(DE)

## Beschreibung

Die Erfindung betrifft eine Fräsvorrichtung zum Bearbeiten, insbesondere Besäumen der Kanten von Blechbändern, Blechplatten oder dgl., mit den weiteren Merkmalen des Oberbegriffes des Patentanspruches 1.

Aus DE-B 1 502 100 ist eine Vorrichtung zum Fräsen langgestreckter Flächen, insbesondere der Seitenflächen fortlaufender Metallbänder oder von langen Stäben bekannt, bei der die Achse eines mit Hartmetallschneiden bestückten Messerkopfes um einen Winkel γ gegen die Ebene eines zu besäumenden Bandes geneigt ist. Hierbei sind die Hartmetallschneiden selbst ebenfalls um den gleichen Winkel γ gegen die Normalebene des Messerkopfes geneigt dieser bekannten Vorrichtung sind jedoch die jeweiligen Schneidkanten geradlinig ausgebildet und können in sich keine Ebene bestimmen, d. h., es läßt sich hierbei keine Schneidkantenebene im Sinne des vorliegenden Anmeldungsgegenstandes definieren. Im übrigen ist bedeutungsvoll, daß die Neigungslage der Freifläche einer geradlinigen Schneide, wie bei der Vorrichtung nach der DE-B 15 02 100, auf die Form des Schnittbogens keinen Einfluß nehmen kann. Die Form des elliptischen Schnittbogens ist durch den Winkel γ bzw. durch den Rotationskegel der Schneidenerzeugenden bestimmt, wobei dessen Größe in Abhängigkeit von der auf die Rotationsachse bezogenen radialen Entfernung des Schneideneingriffspunktes unterschiedlich sein kann.

Der Erfindung liegt die Aufgabe zugrunde, eine Fräsvorrichtung mit den Merkmalen des Oberbegriffes des Anspruches 1 so weiterzubilden, daß in einfacher und kostengünstiger Weise die Bearbeitung der Kanten von Blechbändern, Blechplatten oder dgl. Werkstücken ermöglicht ist, wobei hohe Zerspanungsleistungen bei niedrigen Schneidenbelastungen, selbstschärfende Wirkungen auf die Schneidkanten sowie hohe Standzeiten gewährleistet sein sollen und auch eine Bearbeitung hochfester austenitischer Werkstoffe möglich sein soll.

Diese Aufgabe wird durch die kennzeichnenden Merkmale des Anspruches 1 gelöst, vorteilhafte Weiterbildungen ergeben sich aus den Unteransprüchen 2 - 6.

Bei der erfindungsgemäß ausgebildeten Fräsvorrichtung ist die Form des nicht elliptischen Schnittbogens durch die Form der elliptischen Schneidenerzeugenden entscheidend beinflußt, wobei es auch möglich ist, die Form und die Lage der aktivierten bogenförmigen Erzeugenden der Schneide festzulegen. Da die Schnittrichtungen der einzelnen Schnittkantenpunkte gegenüber der Schneidkantenebene in der Praxis derart kleine Abweichungen aufweisen, ist eine Verwendung der Schneidkantenebene als Freifläche nicht möglich, woraus also folgt, daß beim Anmeldungsgegenstand die Schneidkantenebene 10 nicht als "die Freifläche des runden Schneideinsatzes" definiert werden kann.

Aufgrund der Erfindung ergeben sich gegenüber der bekannten Vorrichtung wesentliche Unterschiede, und zwar nicht nur in konstruktiver Hinsicht, sondern auch, - z. B. bei gleichgroßen Messerkopfdimensionen - hinsichtlich der zerspantechnischen Eigenschaften. Bei der Bearbeitung der Kanten von Blechen beispielsweise dürfen die Richtungen der Zerspankräfte bekanntlich nur geringfügige Abweichungen zur Blechkantenebene aufweisen, da sonst infolge einer Durchbiegung eine plastische Deformation der Kanten entstehen kann oder die starken Vibrationen zum Schneidenbruch führen können. Bei der erfindungsgemäß ausgebildeten Fräsvorrichtung sind derartige Nachteile infolge konstanter Richtungen der Spankräfte von vorneherein vermieden, während beim Gegenstand der DE-B 15 02 100 sich die Richtungen der Zerspankräfte in Abhängigkeit vom Eingriffswinkel 2 φ für die Schneiden ändern können, womit die vorstehend geschilderten Nachteile verbunden sind.

Demgegenüber sind aufgrund der erfindungsgemäßen Lösung lange Eingriffsbögen bei praktisch nur geringfügigen Änderungen der Schnittkräfterichtungen ermöglicht. Hierbei können auch wesentlich längere Schneiden aktiviert werden, womit durch die geringe spezifische Belastung bei gleichbleibender Schnittgeschwindigkeit wesentlich längere Standzeiten erreicht werden können.

Ein weiterer Vorteil der vorliegenden Erfindung liegt in der Tatsache, daß der Eingriffspunkt der Schneidkante auf einer verhältnismäßig geringen radialen Entfernung zur Rotationsachse liegt, so daß dieser Schneideneingriffspunkt das Material mit geringer kinetischer Energie kontaktieren wird. Beim anschließenden Bearbeitungsvorgang beschleunigt sich die beispielsweise als Rundschneide ausgebildete Schneidkante auf das Mehrfache der Eingriffsgeschwindigkeit, bis etwa dreiviertel des Schnittweges, woraufhin sie sich wieder verlangsamt. Auf diese Weise können beim Schnitt außerordentlich hohe Durchschnittsgeschwindigkeiten erreicht werden.

Demgegenüber ist bei der Vorrichtung gemäß der DE-B 15 02 100 die Umfangsgeschwindigkeit des Eingriffspunktes wesentlich höher, so daß der erreichbaren Schnittgeschwindigkeit entsprechend der dynamischen Belastbarkeit der eingreifenden Schneidkante Grenzen gesetzt sind. Infolgedessen ergeben sich hinsichtlich der Leistungsfähigkeit der bekannten Vorrichtung die bereits oben erwähnten nachteiligen Auswirkungen.

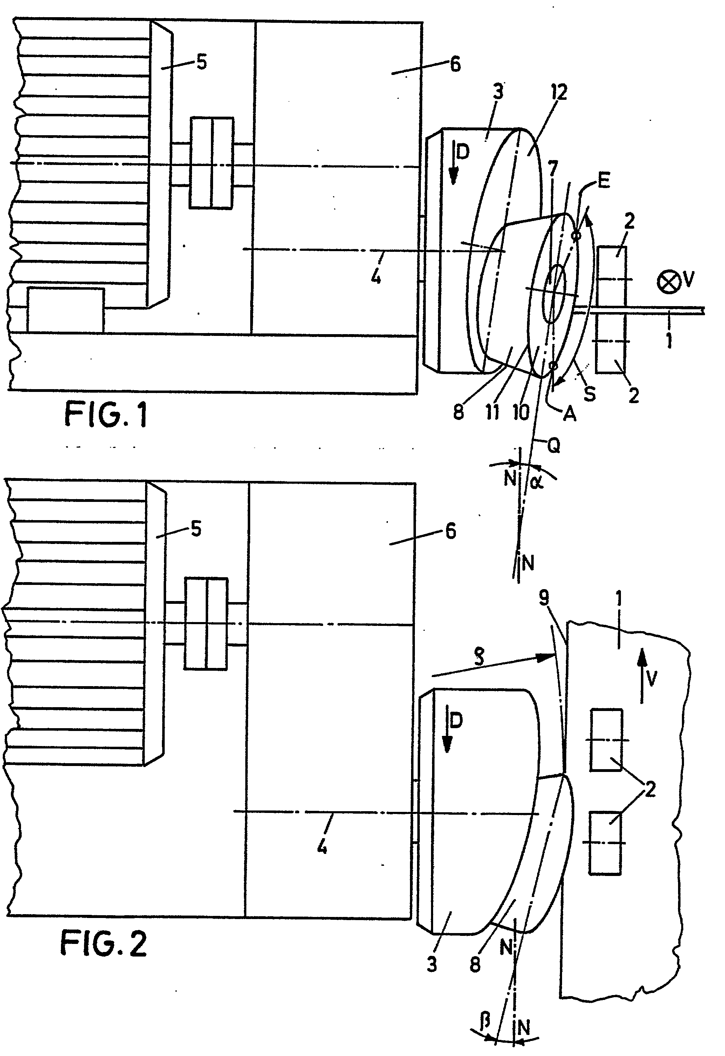

Die Erfindung wird anhand eines Ausführungsbeispieles in der Zeichnung näher erläutert. Diese zeigt - als Fig. 1 bezeichnet - den Erfindungsgegenstand schematisch in Seitenansicht und Fig. 2 als Draufsicht.

Aus Fig.1,2 ist eine Fräsvorrichtung zum Bearbeiten einer Blechkante 9 eines in einer Richtung vorgeschobenen Blechbandes 1 ersichtlich, welches zwischen Führungsrollen 2 zur Bearbeitungsposition gebracht wird. Die Zerspanung wird mit einem Messerkopf 3 durchgeführt, dessen Rotationsachse 4 etwa parallel zur Ebene des Blechbandes 1, sowie etwa senkrecht zur Vorschubrichtung V liegt. Der Messerkopf 3 wird mit Hilfe eines Elektromotors 5 und einer Antriebseinheit 6 in einer Richtung in Umdrehung gesetzt. Der Messerkopf 3 ist durch eine feste Schraubenverbindung 7 mit einem Schneidelement 8 bestückt, dessen Schneidkantenebene 10 zu einer Rotationsebene NN der Messerkopfrotationsachse jeweils um kleine Winkel α und β geneigt angeordnet ist. Die radiale Entfernung der Mitte der rundförmigen Schneidkantenebene 10 zur Rotationsachse 4 ist vorzugsweise kleiner als der Schneidkantenradius. Die Schneidkantenebene 10 ist mit der zum Messerkopf 3 radial außen gelegenen Seite in axialer Richtung mit dem Winkel α geneigt. Der andere Neigungswinkel β wird durch die in axialer Richtung zum Messerkopf 3 erfolgte Neigung der der Drehrichtung gegenüber gelegenen Schneidkantenseite erzeugt. Dabei wird die Schneidkantenebene 10 um ihre durch den Winkel α bestimmte Achse Q verdreht. Bei der Anordnung des Messerkopfes 3 ist es günstig, wenn die Rotationsachse 4 etwa um das dem Schneidenradius entsprechende Maß oberhalb oder unterhalb der Blechebene angeordnet ist.

Bei dieser Fräsvorrichtung kontaktiert die gewölbte Schneidkante 11 des Schneidelements 8, die Blechkante 9 mit einem großgekrümmten Eingriffsbogen φ. Dabei wird die Schneidkante zwischen einem Eingriffspunkt E und einem Ausgriffspunkt A aktiviert. Auf solche Weise kann bei dem Schneidelement 8 annähernd ein etwa dem halben Umfang entsprechendes Schneidkantensegment S zum Schnitt gebracht werden. Durch den so erzeugten ziehenden Schnitt wird eine niedrige Schneidenbelastung und durch den großen Eingriffsbogen φ gleichzeitig ein großes Spanvolumen erreicht.

Ein besonderer zerspantechnologischer Vorteil kann auch dadurch erzielt werden, daß die eingreifende Schneidkante, deren Eingriffspunkt E in der Nähe der Rotationsachse 4 liegt, eine niedrige Geschwindigkeit besitzt. So kann die schlagartige Belastung der Schneidkante 11 wesentlich vermindert werden.

Weitere günstige Eigenschaften können dadurch erreicht werden, daß der Messerkopf 3 bei niedrigen Schnitt-Tiefen eingesetzt wird. Als günstige Schnitt-Tiefe kann dabei das Maß der optimalen Spanstärke betrachtet werden. Auf diese Weise ist es möglich, bei besonders kleinen Fräserdimensionen große Zerspanleistungen bzw. große Kommafaktoren zu erzielen. Um diese Eigenschaften ausnützen zu können, ist es vorteilhaft, wenn größere Schnitt-Tiefen mit mehreren Frässtufen bearbeitet werden. Um die auf das Werkstück wirkenden reaktiven Zerspankräfte eliminieren zu können, ist es günstig, wenn die Frässtufen je nach Bedarf wechselweise gleichläufig und gegenläufig eingesetzt werden.

Die Verwendung mindestens einer Rundschneide 8 kann auch noch den Vorteil bringen, daß durch das Lösen und Weiterverdrehen der abgenützten Kanten praktisch der ganze Schneidkantenumfang ausgenützt werden kann. Dabei stellt die Rundschneide ein optimales Verhältnis zwischen der angestrebten kleinen Schneidendimension und der langen Schneidkante her.

Im übrigen können anstatt einer Rundschneide am Schneidelement 8 auch mehrere kreisbogenförmige oder der Kreisform annähernd gekrümmte Schneidkantensegmente 10 um zwei kleine Winkel α und β geneigt ist und jeweils durch einen Eingriffspunkt E und einem Ausgriffspunkt A bestimmt sind. Bei dieser Ausführung besitzen sämtliche Schneidsegmente des Schneidelements 8 eine untereinander identische Form.

## Patentansprüche

1. Fräsvorrichtung zum Bearbeiten, insbesondere Besäumen der Kanten (9) von Blechbändern, Blechplatten oder dgl. Werkstücken, wobei das Werkstück (1) in beliebiger Form und Richtung (V) zwischen Führungsrollen (2) zur Bearbeitungsposition vorschiebbar ist, mit einem motorisch in Umdrehung versetzbaren Messerkopf (3), dessen Rotationsachse (4) etwa parallel zur Werkstückebene und etwa senkrecht zur Vorschubrichtung (V) liegt und der mindestens ein Schneidelement (8) aufweist, an dem eine unter einem Winkel die Normalebene des Messerkopfes geneigt angeordnete Schneidkante (11) ausgebildet ist, dadurch gekennzeichnet, daß die Schneidkante(n) (11) als konvex gekrümmte Schneidkante(n) ausgebildet ist (sind) und daß das (die) Schneidelement(e) (8) in der Weise auf der Messerkopfstirnseite (12) angeordnet ist (sind), daß die auf die durch die Schneidkanten (11) definierte Schneidkantenebene (10) bezogene Schneidkantenmitte außerhalb der Rotationsachse (4) liegt und die Schneidkantenebene (10) in zweifacher Hinsicht in Bezug auf die Rotationsebene (NN) des Messerkopfes (3) geneigt ist und zwar einerseits in der Vorschubrichtung (V) gesehen mit einer Neigung um einen ersten kleinen Winkel (α) gegenüber einer die Rotationsachse (4) senkrecht schneidenden Ebene und andererseits rechtwinklig zur Vorschubrichtung (V) gesehen mit einer Neigung um einen zweiten kleinen Winkel (β) gegenüber der die Rotationsachse (4) senkrecht schneidenden Ebene, derart, daß die verdrehende Schneidkante (11) einen zur Rotationsachse (4) nahe gelegenen Eingriffspunkt (E) sowie einen mit wesentlich größerer radialer Entfernung gelegenen Ausgriffspunkt (A) aufweist, wodurch sich jeweils ein relativ langes Schneidkantensegment (S) zur Erzeugung eines ziehenden Schnittes entlang dieses Schneidkantensegmentes und zur Werkstückbearbeitung mit einem großen Eingriffsbogen (φ) ergibt.

2. Vorrichtung nach Anspruch 1, dadurch gekennzeichnet, daß der Messerkopf (3) stirnseitig mindestens eine durch die beiden Winkel (α) und (β) bestimmte Aufspannfläche (12) für das (die) Schneidelemente (8) aufweist.

3. Vorrichtung nach Anspruch 1 oder 2, dadurch gekennzeichnet, daß die Konvex gekrümmte Schneidkante (11) des Schneidelements (8) durch eine Schneidkante mit einer Anzahl von Schneidsegmenten gebildet ist, die durch jeweils einen Eingriffspunkt (E) und einen Ausgriffspunkt (A) bestimmt sind.

4. Vorrichtung nach Anspruch 3, dadurch gekennzeichnet, daß sämtliche Schneidsegmente des Schneidelementes eine untereinander identische Formgebung aufweisen.

5. Vorrichtung nach Anspruch 3 oder 4, dadurch gekennzeichnet, daß die Schneidsegmente des Schneidelementes kreisförmig ausgebildet sind oder eine der Kreisform angenäherte Formgebung besitzen.

6. Vorrichtung nach einem der vorangehenden Ansprüche, dadurch gekennzeichnet, daß die radiale Entfernung der Mitte der Schneidkantenebene (10) zur Rotationsachse (4) des Messerkopfes (3) kleiner als der Schneidkantenradius ist.

**Revendications**

1. Dispositif de fraisage pour usiner, en particulier ébavurer, les bords (9) de tôles en bande, de tôles en plaque ou de pièces analogues, dans lequel la pièce (1), de forme et de sens (V) quelconques, est déplaçable entre des galets de guidage (2) vers la position d'usinage et qui comporte une tête de fraisage (3) agencée de manière à pouvoir être entraînée en rotation par un moteur, tête de fraisage dont l'axe de rotation (4) est sensiblement parallèle au plan de la pièce et sensiblement orthogonal au sens de déplacement (V) et qui comprend au moins un élément de coupe (8) sur lequel est réalisé un taillant (11) incliné d'un certain angle par rapport au plan transversal de la tête de fraisage, caractérisé en ce que le(s) taillants (11) est (sont) formé(s) par un (des) taillant(s) courbés(s) de façon convexe et ce que le(s) élément(s) de couple (8) est (sont) disposé(s) sur la face frontale (12) de la tête de fraisage de manière que le centre du ou des taillants pris dans le plan (10) défini par les taillants (11) soit décalé par rapport à l'axe de rotation (4) et que le plan (10) des taillants soit incliné à un double point de vue par rapport au plan de rotation (NN) de la tête de fraisage (3), à savoir, pris dans le sens de déplacement (V) d'une part, à raison d'une inclinaison correspondant à un premier petit angle (α) par rapport à un plan coupant à angle droit l'axe de rotation (4) et, pris transversalement par rapport au sens de déplacement (V) d'autre part, à raison d'une inclinaison correspondant à un deuxième petit angle (β) par rapport au plan coupant à angle droit l'axe de rotation (4), de telle façon que le taillant (11) en rotation présente un point d'attaque (E) proche de l'axe de rotation (4) ainsi qu'un point de dégagement (A) sensiblement plus éloigné radialement, ce grâce à quoi il est fourni chaque fois un segment de taillant (5) relativement long pour effectuer une coupe continue suivant ce segment de taillant et pour usiner la pièce avec un grand arc d'attaque (φ).

2. Dispositif selon la revendication 1, caractérisé en ce que la tête de fraisage (3) comporte frontalement au moins une surface de fixation (12) déterminée par les deux angles (α) et (β) et destinée à l'(aux) élément(s) de coupe (8).

3. Dispositif selon la revendication 1 ou 2, caractérisé en ce que le taillant (11) courbé de façon convexe de l'élément de coupe (8) est formé par un taillant muni d'une pluralité de segments de taillant qui sont définis chacun par un point d'attaque (E) et un point de dégagement (A).

4. Dispositif selon la revendication 3, caractérisé en ce que les segments de taillant des éléments de coupe ont tous la même forme.

5. Dispositif selon la revendication 3 ou 4, caractérisé en ce que les segments de taillant des éléments de coupe ont une forme circulaire ou possèdent une forme voisine de la forme circulaire.

6. Dispositif selon l'une des revendications précédentes, caractérisé en ce que le décalage radial du centre du plan (10), défini par le taillant, par rapport à l'axe de rotation (4) de la tête de fraisage (3) est plus petit que le rayon du taillant.

**Claims**

1. A milling attachment for machining, particularly trimming the edges (9) of sheet metal strips, sheet metal plates or like workpieces, the workpiece (1) being fed in any desired form and direction (V) between guide rollers (2) to the machining position, with a cutter head (3) adapted to be turned under motor power, the axis of rotation (4) of which is substantially parallel with the workpiece plane and substantially at right-angles to the direction of feed (V) and which comprises at least one cutting element (8) on which there is constructed a cutting edge (11) disposed at an angle of inclination to the plane at right-angles to that of the cutter head, characterised in that the cutting edge(s) (11) is/are constructed as convexly curved cutting edge(s) and in that the cutting element(s) (8) is/are so disposed on the face of the cutting head (12) that the centre of the cutting edge related to the cutting edge plane (10) defined by the cutting edges (11) lies outside the axis of rotation (4) while the cutting edge plane (10) is in dual respect inclined in relation to the plane of rotation (NN) of the cutter head (3) and is in fact, when viewed in the direction of feed (V), on the one hand disposed at an angle of inclination about a first small angle (α) in respect of a plane which intersects the axis of rotation (4) at a right-angle and on the other, viewed at right-angles to the direction of feed (V), has an angle of inclination about a second small angle (β) in respect of the plane which intersects the axis of rotation (4) at a right-angle so that the rotating cutting edge (11) has a point of engagement (E) which is close to the axis of rotation (4) and at a substantially greater radial distance therefrom a point of disengagement (A), so that there is in any case a relatively long cutting edge segment (S) for creating a drawing cut along this cutting edge segment and for machining the workpiece with a considerable engagement arc (φ).

2. An attachment according to Claim 1, characterised in that the face of the cutter head (3) comprises at least one clamping face (12) defined by the two angles (α) and (β) for the cutting element(s) (8).

3. An attachment according to Claim 1 or 2, characterised in that the convexly curved cutting edge (11) of the cutting element (8) is formed by a cutting edge with a number of cutting segments which are defined by in each case an engagement point (E) and a disengagement point (A).

4. An attachment according to Claim 3, characterised in that all cutting segments of the cutting element are shaped so that they are identical to one another.

5. An attachment according to Claim 3 or 4, characterised in that the cutting segments of the cutting element are of a circular shape or are of a shape which approximates that of a circle.

6. An attachment according ot one of the preceding Claims, characterised in that the radial remoteness of the centre of the cutting edge plane (10) to the axis of rotation (4) of the cutter head (3) is smaller than the radius of the cutting edge.

FIG.1

FIG.2